# EUROPÄISCHE PATENTSCHRIFT

(11) **EP 3 833 226 B1**
(45) Veröffentlichungstag und Bekanntmachung des Hinweises auf die Patenterteilung: **20.09.2023**
(21) Anmeldenummer: 19731185.5
(22) Anmeldetag: 07.06.2019
(51) Int. Cl.: A47J 31/16, A47J 31/44, A47J 31/48, A47J 31/58, A47J 31/36

(54) **VORRICHTUNG UND VERFAHREN ZUR ZUBEREITUNG EINES GETRÄNKS**
APPARATUS AND METHOD FOR PREPARING A BEVERAGE
DISPOSITIF ET PROCÉDÉ DE PRÉPARATION D'UNE BOISSON

(30) Priorität: 09.08.2018 DE 102018119439
(43) Veröffentlichungstag der Anmeldung: 16.06.2021
(73) Patentinhaber: Melitta Single Portions GmbH & Co. KG, 32425 Minden (DE)
(72) Erfinder: MERSCH, Pia, 58332 Schwelm (DE)
(74) Vertreter: Dantz, Jan Henning
(86) Internationale Anmeldenummer: PCT/EP2019/064993
(87) Internationale Veröffentlichungsnummer: WO 2020/030329

(56) Entgegenhaltungen:
- WO-A1-2010/052111
- WO-A1-2016/041232
- CN-A- 107 259 928
- GB-A- 2 505 659
- US-A1- 2008 173 183

## Beschreibung

Die vorliegende Erfindung betrifft eine Vorrichtung zur Zubereitung eines Getränks mit einem Behälter zum Befüllen mit Wasser, einer Basisstation mit einer Heizeinrichtung, auf der der Behälter zum Erhitzen des Wassers abstellbar ist, wobei der Behälter auf dem Deckel zum Brühen des Getränkes abstellbar ist, und einem Deckel zum Verschließen des Behälters, und ein Verfahren zur Zubereitung eines Getränks.

Es sind manuelle Formen der Teezubereitung bekannt, bei denen Wasser in ein heißes Gefäß gegeben wird, das optional mit einem Deckel verschließbar ist. Der Benutzer muss die Zubereitungstemperatur und die Ziehzeit im Blick haben, während der Tee von heißem Wasser umspült wird. Diese Art der Zubereitung ist nicht anwenderfreundlich, es bei Teebeuteln oder Teesieben es zu Verschmutzungen durch herabtropfende Teeflüssigkeit kommen kann und bei loser Zugabe von Teeblättern die Reinigung aufwändig ist.

Zudem sind Maschinen zur Zubereitung von Getränken bekannt, wie sie beispielsweise in der EP 3 166 451 B1 offenbart sind. Solche Maschinen umfassen eine Brühkammer, an der seitlich eine Kapsel mit Extraktionsmaterial positionierbar ist, um dann heißes Wasser in die Brühkammer zu geben und das Getränk zuzubereiten. Dies entlastet den Benutzer hinsichtlich der Schritte der Zubereitung von heißem Wasser und Beachtung der korrekten Ziehzeit, allerdings ist die Reinigung der Brühkammer und der flüssigkeitsführenden Leitungen aufwändig.

CN107259928 offenbart eine Vorrichtung zur Zubereitung eines Getränkes nach dem Oberbegriff des Anspruches 1, bei der Teeblätter in einen Filter eingefügt werden, um dann durch Umdrehen des Behälters auf den Deckel den Tee zuzubereiten.

Es ist daher Aufgabe der vorliegenden Erfindung, eine Vorrichtung und ein Verfahren zur Zubereitung eines Getränkes zu schaffen, die eine einfache Zubereitung von Brühgetränken ermöglichen und bei denen die Handhabung durch eine einfache Reinigung verbessert ist.

Diese Aufgabe wird mit einer Vorrichtung mit den Merkmalen des Anspruches 1 und einem Verfahren mit den Merkmalen des Anspruches 11 gelöst.

Bei der erfindungsgemäßen Vorrichtung kann ein Deckel mit einer Aufnahme für eine Kapsel mit einem Extraktionsmaterial vorgesehen werden, die zu einem Innenraum des Behälters zumindest teilweise hin geöffnet ist, wobei der Behälter auf dem Deckel zum Brühen des Getränkes abstellbar ist. Dadurch kann die Einheit aus Behälter und Deckel für einen Brühvorgang umgedreht werden, damit der zunächst oben angeordnete Deckel dann unten positioniert ist und das heiße Wasser in die Kapsel mit dem Extraktionsmaterial strömen kann. Nach einer vorbestimmten Verweilzeit kann dann der Behälter wieder umgedreht werden, so dass der Deckel wieder an der Oberseite angeordnet ist. Die Umdrehbewegungen kann der Benutzer vornehmen, ohne dass heißes Wasser aus dem Innenraum des Behälters herausströmen kann. Am Ende kann der Deckel von dem Behälter abgenommen werden, so dass der Benutzer das Extraktionsmaterial nicht unmittelbar entsorgen muss, sondern dies über die Kapsel vornehmen kann, in der das Extraktionsmaterial durch ein Sieb oder eine perforierte Folie gehalten sein kann. Dadurch kann nach Benutzung des Behälters dieser leicht gereinigt werden, da Deckel und Behälter auf einfache Weise zusammengefügt und demontiert werden können.

Gemäß einer bevorzugten Ausgestaltung ist der Deckel und die Verbindung zwischen dem Deckel und dem Behälter in der Brühposition mit dem unten angeordneten Deckel abgedichtet. Hierfür kann an dem Deckel beispielsweise eine ringförmige Dichtung vorgesehen sein, die an einer Kontaktfläche des Behälters anliegt, um eine abgedichtete Verbindung zwischen Deckel und Behälter zu gewährleisten. Die Verbindung zwischen Deckel und Behälter kann rastend oder klemmend sein, beispielsweise über einen Schraubverschluss, einen Bajonettverschluss oder einen Verschluss mittels eines Schnellspanners. Die entsprechende Mechanik zum Anklemmen und Verriegeln des Deckels kann einfach zu betätigen sein und für eine sichere Abdichtung sorgen.

Wenn das heiße Wasser in dem Behälter mit montiertem Deckel erhitzt werden soll, kann an dem Deckel mindestens ein Überdruckventil angeordnet sein, das einen Überdruck in dem Behälter beim Erhitzen des Wassers vermeidet. Wenn beim Erhitzen Dampfblasen entstehen, kann der Dampf über das mindestens eine Überdruckventil entweichen. Beim Brühen mit dem Deckel an der Unterseite des Behälters kann das Überdruckventil hingegen verschlossen sein, um ein Auslaufen von Flüssigkeit zu vermeiden.

Vorzugsweise ist die Kapsel an der Aufnahme des Deckels verrastbar oder verriegelbar. Dadurch kann der Deckel mit montierter Kapsel beliebig gedreht werden, ohne dass die Kapsel aus der Aufnahme herausfällt. Die Kapsel kann dabei auf der zu dem Innenraum gewandten Seite mit einem Sieb oder einer perforierten Folie versehen sein, um in der montierten Position einen Zugang der Flüssigkeit in die Kapsel zu ermöglichen, aber das Extraktionsmaterial in der Kapsel zu halten. Die Kapsel kann beispielsweise über Raststege an der Aufnahme gesichert sein, und nach dem Abnehmen des Deckels kann die Kapsel mit dem Sieb oder der perforierten Folie nach oben in dem Deckel angeordnet werden, so dass eine Verunreinigung einer Auflage oder der Aufnahme verhindert wird. Die gebrauchte Kapsel kann dann zu einem beliebigen Zeitpunkt später entsorgt werden.

Die Vorrichtung umfasst in einer bevorzugten Ausgestaltung Mittel zur Ausgabe eines optischen und/oder akustischen Signals zur Anzeige des Endes des Brühvorgangs. Hierfür kann an der Basisstation eine Anzeige, Leuchtmittel und/oder Lautsprecher vorgesehen sein, um das Ende des Brühvorganges anzuzeigen. Die Basisstation kann den Beginn des Brühvorganges wahlweise mit dem Erreichen der Brühtemperatur und dem Ausschalten der Heizeinrichtung ermitteln, oder durch eine Eingabe durch den Benutzer.

Erfindungsgemäß ist an dem Deckel und/oder der Basisstation ein Lesegerät zum Auslesen einer Codierung an der Kapsel vorgesehen. Ein solches Lesegerät kann bei dem Deckel unmittelbar benachbart zu der Aufnahme angeordnet sein, so dass nach dem Einfügen der Kapsel das Lesegerät eine Codierung einer Oberfläche der Kapsel auslesen kann. Hierfür können an der Kapsel Codierungen in Form von Farben, Strichen, Profilierungen, Markierungen, RFID-Chips, Lichtleiter oder andere Codierungen vorgesehen sein, die eine Unterscheidung zwischen unterschiedlichen Kapseltypen ermöglichen, damit die Zubereitung optimiert gesteuert werden kann. Die Brühparameter zur Zubereitung von schwarzem, grünem oder weißem Tee unterscheiden sich, so dass über das Auslesen der Codierung das Lesegerät Informationen an eine Steuerung der Basisstation geben kann, um den Brühvorgang hinsichtlich der Temperatur und der Brühzeit entsprechend steuern zu können. Alternativ kann das Leseberät auch an der Basisstation vorgesehen sein, so dass durch ein Anordnen der Kapsel an der Basisstation zunächst die Codierung ausgelesen wird, bevor die Kapsel dann in den Deckel für einen Brühvorgang eingesetzt wird.

Der Behälter kann beispielsweise zylindrisch ausgebildet sein und einen Boden aufweisen. Das Volumen eines Innenraumes des Behälters kann zwischen 0,1 I bis 1 I, vorzugsweise zwischen 0,2 I bis 0,5 I, betragen, um gleichzeitig eine oder mehrere Getränkeportionen zubereiten zu können.

Bei dem erfindungsgemäßen Verfahren zur Zubereitung eines Getränkes wird zunächst ein Behälter mit Wasser gefüllt und eine Kapsel mit einem Extraktionsmaterial in einem Deckel angeordnet. Der Behälter wird auf eine Basisstation aufgesetzt und das Wasser erhitzt. Vor, beim oder nach dem Erhitzen des Wassers wird der Deckel an dem Behälter fixiert, um dann den Behälter umzudrehen, so dass der Deckel mit der Kapsel unten angeordnet ist und ein Getränk gebrüht wird. Nach einer vorbestimmten Zeit kann der Behälter wieder umgedreht werden, um das Getränk zu entnehmen.

Für eine automatische Anweisung des Benutzers wird erfindungsgemäß vor dem Brühvorgang eine Codierung an der Kapsel ausgelesen, mittels der die Brühzeit und/oder die Wassertemperatur steuerbar ist.

Der Deckel wird vorzugsweise vor der Entnahme des Getränks abgenommen, so dass der Behälter unmittelbar als Trinkgefäß dient. Optional kann statt dem Deckel ein Trinkaufsatz an dem Behälter montiert werden.

Die Erfindung wird nachfolgend anhand eines Ausführungsbeispiels mit Bezug auf die beigefügten Zeichnungen näher erläutert. Es zeigen:
- Figur 1: eine perspektivische Ansicht einer erfindungsgemäßen Vorrichtung zur Zubereitung eines Getränks, und
- Figuren 2A bis 2E: mehrere Ansichten der Vorrichtung der Figur 1 in unterschiedlichen Verfahrenspositionen.

Eine Vorrichtung 1 zur Zubereitung eines Getränks umfasst einen Behälter 2, der auf einer Basisstation 3 mit einer Heizeinrichtung abstellbar ist. Die Basisstation 3 ist über einen Stecker 30 an eine Stromversorgung angeschlossen und kann optional mehrteilig mit einem Unterteil 31 und einem Oberteil 34 ausgestattet sein, die voneinander trennbar sind. An der Basisstation 3 ist ein Bedienknopf 32 als Eingabeelement vorgesehen. Zudem kann eine Anzeige 33 in Form von Leuchtmitteln oder einem Bildschirm vorgesehen sein. In der Basisstation 3 ist eine Steuerung angeordnet, mittels der die Heizeinrichtung betrieben wird, um Wasser in dem Behälter 2 auf eine gewünschte Temperatur zu erhitzen. Die Heizeinrichtung kann hierfür eine erhitzbare Auflageplatte, ein induktives Heizmittel oder andere Heizelemente aufweisen. Optional kann die Heizeinrichtung auch Heizschleifen kontaktieren, die in dem Boden des Behälters 2 integriert sind. In jedem Fall kann mittels der Heizeinrichtung in einem Innenraum des Behälters 2 angeordnetes Wasser erhitzt werden. Für das Aufheizen des Wassers sind ferner Lösungen wie eine Dickschichtheizung oder ein induktives Heizen einsetzbar. Alternativ kann auch ein Tauchsieder oder eine Heizspierale eingesetzt werden.

In dem Deckel 4 ist eine Aufnahme zum Einfügen einer Kapsel 5 mit einem Extraktionsmaterial angeordnet. Eine solche Kapsel ist beispielsweise in der DE 10 2014 109 768 A1 beschrieben, auf die hiermit Bezug genommen wird. Die Kapsel in diesem Dokument besitzt Codierungen in Form von Lichtleitern am Boden der Kapsel, wobei die Art der Codierungen natürlich auch anders gewählt werden kann, beispielsweise mit Farbelementen, Profilierungen oder anderen Markierungselementen. In jedem Fall umfasst die Kapsel ein topfförmiges Gehäuse, das an einer Seite mit einem flüssigkeitsdurchlässigen Material verbunden ist, insbesondere ein flüssigkeitsdurchlässiges Sieb oder eine perforierte Folie. Das Sieb oder die perforierte Folie können zur Lagerung mit einer Schutzfolie überdeckt sein, die für den Brühvorgang abgezogen wird.

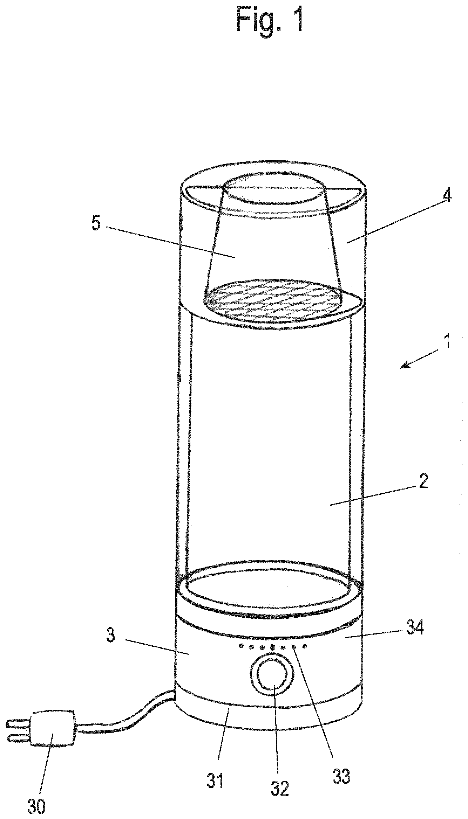

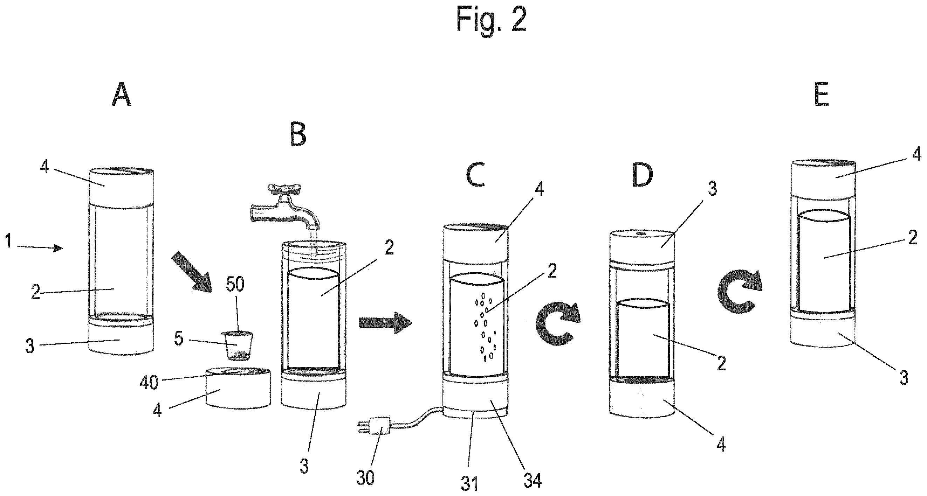

In den Figuren 2A bis 2E ist ein Brühvorgang mit der Vorrichtung 1 der Figur 1 schematisch dargestellt. Bei der Vorrichtung 1 wird gemäß Figur 2A zunächst der Deckel von dem Behälter 2 abgenommen, um den Behälter 2 mit Wasser zu befüllen, wie dies schematisch in Figur 2B gezeigt ist. Der Behälter 2 muss sich dabei nicht auf der Basisstation 3 befinden, sondern kann von dieser zum Befüllen mit Wasser abgenommen werden. Zudem wird eine Kapsel 5 in eine Aufnahme 40 an dem Deckel 4 eingefügt, wobei die Kapsel 5 eine für Flüssigkeit zumindest teilweise offene Seite 50 aufweist, die beispielsweise als Sieb, Gitter oder perforierte Folie ausgebildet ist. Die Kapsel 5 kann dabei in der Aufnahme 40 verrastet oder verriegelt werden, um ein Herausfallen der Kapsel 5 beim Drehen des Deckels 4 zu vermeiden.

In einem nächsten Schritt wird gemäß Figur 2C das Wasser in dem Behälter 2 erhitzt, wobei optional der Deckel 4 an dem Behälter 2 montiert ist. Es können beim Erhitzen des Wassers in dem Behälter 2 Dampfblasen entstehen, die den Druck erhöhen. Daher kann in dem Deckel 4 ein Überdruckventil vorgesehen sein, das bei Überschreiten eines vorbestimmten Innendruckes in dem Behälter 2 öffnet und den entstehenden Dampf entweichen lässt. Das Erhitzen erfolgt über die an der Basisstation angeordnete Heizeinrichtung, wie dies durch die Stromversorgung über den Stecker 30 symbolisch dargestellt ist.

Nach dem Erhitzen des Wassers wird der Behälter 2 umgedreht, wie dies in Figur 2D gezeigt ist. Damit ist der Deckel 4 unten angeordnet, und das in dem Behälter 2 im Innenraum angeordnete Wasser strömt somit auf den Deckel 4 und insbesondere in die flüssigkeitsdurchlässige Seite der Kapsel 5. Dadurch wird das Extraktionsmaterial in der Kapsel 5 mit heißem Wasser umspült und kann eine gewünschte Zeit ziehen, um das Getränk herzustellen. Der Deckel 4 und der Behälter 2 sind dabei abgedichtet miteinander verbunden, wobei hierfür an dem Deckel 4 eine entsprechende ringförmige Dichtung vorgesehen sein kann, die an einer Kontaktfläche des Behälters 2 anliegt. In Figur 2D ist das Oberteil 34 der Basisstation 3 oben an dem Behälter 2 angeordnet. Es ist natürlich auch möglich, das Oberteil 34 auf der Basisstation 3 zu lassen und den Deckel 4 auf der Basisstation 3 oder einer anderen Auflagefläche abzustellen. Dann ist statt des Oberteils 34 nur der Boden des Behälters 2 an der Oberseite angeordnet.

Nach dem Brühvorgang kann der Behälter 2 erneut gedreht werden, wie dies in Figur 2E gezeigt ist. Der Deckel 4 befindet sich nun wieder an einer Oberseite des Behälters 2, und das Oberteil 34 oder die Basisstation 3 sind unten angeordnet, wobei der Behälter 2 optional auch auf eine andere Auflagefläche als die Basisstation 3 abgestellt werden kann. Der Benutzer kann nun den Deckel 4 entfernern und den Behälter 2 als Trinkbehälter einsetzen, also unmittelbar aus dem Behälter 2 trinken. Optional kann statt dem Deckel 4 auch ein Trinkaufsatz an dem Behälter 2 fixiert werden, der beispielsweise mit einer Tülle versehen ist, um den Behälter 2 auch für unterwegs mitnehmen zu können. Ferner kann um den Behälter 2 ein Griffschutz mit einer Isolierung vorgesehen werden. Zudem kann optional an dem Deckel 4 auch ein Verschlusselement vorgesehen sein, das nach dem Brühvorgang geöffnet wird, um das zubereitete Getränk aus dem Behälter 2 ausgießen zu können.

Die Basisstation 3 kann den Benutzer mit einer Anzeige und einer Steuerung über gewisse Parameter bei der Zubereitung des Getränks informieren. Beispielsweise kann die Brühtemperatur oder die Brühzeit angezeigt oder anderweitig signalisiert werden. Zudem kann am Ende der Brühzeit ein Alarm abgebeben werden in optischer oder akustischer Form. Der Beginn der Brühzeit kann optional durch die Temperatur beim Erhitzen des Wassers oder erst durch Umdrehen des Behälters gestartet werden.

### Bezugszeichenliste

- 1: Vorrichtung
- 2: Behälter
- 3: Basisstation
- 4: Deckel
- 5: Kapsel
- 30: Stecker
- 31: Unterteil
- 32: Bedienknopf
- 33: Anzeige
- 34: Oberteil
- 40: Aufnahme
- 50: Seite

## Patentansprüche

1. Vorrichtung (1) zur Zubereitung eines Getränks, mit:
a) einem Behälter (2) zum Befüllen mit Wasser;
b) einer Basisstation (3) mit einer Heizeinrichtung, auf der der Behälter (2) zum Erhitzen des Wassers abstellbar ist;
c) einem Deckel (4) zum Verschließen des Behälters (2), wobei der Behälter (2) auf dem Deckel (4) zum Brühen des Getränkes abstellbar ist,
**dadurch gekennzeichnet, dass** an oder in dem Deckel (4) eine Aufnahme (40) zum Einfügen einer Kapsel (5) mit einem Extraktionsmaterial vorgesehen ist, die zu einem Innenraum des Behälters (2) hin zumindest teilweise geöffnet ist und an dem Deckel (4) und/oder der Basisstation (3) ein Lesegerät zum Auslesen einer Codierung an der Kapsel (5) vorgesehen ist.

2. Vorrichtung nach Anspruch 1, **dadurch gekennzeichnet, dass** der Deckel (4) und die Verbindung zwischen dem Deckel (4) und dem Deckel (2) in der Brühposition mit dem unten angeordneten Deckel (4) abgedichtet ist.

3. Vorrichtung nach Anspruch 1 oder 2, **dadurch gekennzeichnet, dass** der Deckel (4) an dem Behälter (2) klemmend oder rastend festlegbar ist.

4. Vorrichtung nach einem der vorhergehenden Ansprüche, **dadurch gekennzeichnet, dass** an dem Deckel (4) mindestens ein Überdruckventil zur Vermeidung eines Überdruckes in dem Behälter (2) mit aufgesetztem Deckel (4) vorgesehen ist.

5. Vorrichtung nach einem der vorhergehenden Ansprüche, **dadurch gekennzeichnet, dass** die Kapsel (5) an der Aufnahme (40) verrastbar oder verriegelbar ist.

6. Vorrichtung nach einem der vorhergehenden Ansprüche, **dadurch gekennzeichnet, dass** die Vorrichtung (1) Mittel zur Ausgabe eines optischen und/oder akustischen Signals zur Anzeige des Endes des Brühvorganges aufweist.

7. Vorrichtung nach einem der vorhergehenden Ansprüche, **dadurch gekennzeichnet, dass** an dem Deckel (4) eine ringförmige Dichtung gehalten ist, die an einer Kontaktfläche des Behälters zur Abdichtung anlegbar ist.

8. Vorrichtung nach einem der vorhergehenden Ansprüche, **dadurch gekennzeichnet, dass** der Behälter (2) im Wesentlichen zylinderförmig mit einem Boden ausgebildet ist.

9. Vorrichtung nach einem der vorhergehenden Ansprüche, **dadurch gekennzeichnet, dass** der Behälter (2) zumindest bereichsweise aus einem transparenten Material, insbesondere Glas, ausgebildet ist.

10. Vorrichtung nach einem der vorhergehenden Ansprüche, **dadurch gekennzeichnet, dass** die Kapsel (5) ein Sieb auf der zu dem Innenraum des Behälters (2) gewandten Seite aufweist.

11. Verfahren zur Zubereitung eines Getränks, mit den folgenden Schritten:
- Befüllen eines Behälters (2) mit Wasser;
- Anordnen einer Kapsel (5) mit einem Extraktionsmaterial in einem Deckel (4);
- Aufsetzen des Behälters (2) auf eine Basisstation (3) zum Erhitzen des Wassers;
- Fixieren des Deckels (2) vor, beim oder nach dem Erhitzen des Wassers in dem Behälter (2);
- Umdrehen des Behälters (2) mit dem Deckel (4) zum Brühen eines Getränks für eine vorbestimmte Zeit;
- Umdrehen des Behälters und Entnehmen des Getränks, wobei
- vor dem Brühvorgang eine Codierung an der Kapsel (5) ausgelesen wird, mittels der die Brühzeit und/oder die Wassertemperatur steuerbar ist.

12. Verfahren nach Anspruch 11, **dadurch gekennzeichnet, dass** der Deckel (4) zum Entnehmen des Getränks abgenommen wird und der Behälter (2) als Trinkgefäß dient.

13. Verfahren nach Anspruch 12, **dadurch gekennzeichnet, dass** nach dem Abnehmen des Deckels (4) ein Trinkaufsatz an dem Behälter (2) montiert wird.

## Claims

1. Device (1) for the preparation of a beverage, with:
a) a container (2) for filling with water;
b) a base station (3) with a heating device on which the container (2) for heating the water can be placed;
c) a lid (4) to close the container (2), wherein the container (2) can be placed on the lid (4) for brewing the beverage,
**characterized in that** a receptacle (40) for inserting a capsule (5) with an extraction material is provided on or in the lid (4), which receptacle (40) is at least partially open towards an interior of the container (2) and a reader for reading a code on the capsule (5) is provided on the lid (4) and/or the base station (3).

2. Device according to claim 1, **characterized in that** the lid (4) and the connection between the lid (4) and the container (2) is sealed in the brewing position with the lid (4) arranged below.

3. Device according to claim 1 or 2, **characterized in that** the lid (4) can be fixed to the container (2) by clamping or latching.

4. Device according to one of the preceding claims, **characterized in that** at least one overpressure valve is provided on the lid (4) to prevent overpressure in the container (2) with the lid (4) in place.

5. Device according to one of the preceding claims, **characterized in that** the capsule (5) can be latched or locked to the receptacle (40).

6. Device according to one of the preceding claims, **characterized in that** the device (1) comprises means for emitting a visual and/or acoustic signal to indicate the end of the brewing operation.

7. Device according to one of the preceding claims, **characterized in that** an annular seal is held on the lid (4), which can be applied to a contact surface of the container for sealing.

8. Device according to one of the preceding claims, **characterized in that** the container (2) is substantially cylindrical with a bottom.

9. Device according to one of the preceding claims, **characterized in that** the container (2) is formed at least in part from a transparent material, in particular glass.

10. Device according to one of the preceding claims, **characterized in that** the capsule (5) has a sieve on the side facing the interior of the container (2).

11. A method for preparing a beverage, comprising the following steps:
- Filling a container (2) with water;
- Arrange a capsule (5) with an extraction material in a lid (4);
- Place the container (2) on a base station (3) to heat the water;
- Fix the lid (4) before, during or after heating the water in the container (2);
- Turning over the container (2) with the lid (4) to brew a drink for a predetermined time;
- Turn the container over and remove the beverage, whereby
- before the brewing process a code is read out on the capsule (5), by means of which the brewing time and/or the water temperature can be controlled.

12. A method according to claim 11, **characterized in that** the lid (4) is removed for removing the beverage and the container (2) serves as a drinking vessel.

13. Method according to claim 12, **characterized in that** after removing the lid (4), a drinking attachment is mounted on the container (2).

## Revendications

1. Dispositif (1) pour préparer une boisson comprenant :
a) un récipient (2) à remplir avec de l'eau,
b) une embase (3) avec une installation de chauffage sur laquelle se dépose le récipient (2) pour chauffer l'eau,
c) un couvercle (4) pour fermer le récipient (2), le récipient (2) pouvant se poser sur le couvercle (4) pour infuser la boisson,
**caractérisé par** un logement (40) sur ou dans le couvercle (4), pour insérer une capsule (5) avec un matériau d'extraction qui s'ouvre au moins partiellement vers le volume intérieur du récipient (2), le couvercle (4) et/ou l'embase (3) comportant un appareil de lecture pour lire le code de la capsule (5).

2. Dispositif selon la revendication 1, **caractérisé en ce que** le couvercle (4) et la liaison entre le couvercle (4) et le récipient (2) en position d'infusion est rendue étanche avec le couvercle (4) placé en dessous.

3. Dispositif selon la revendication 1 ou 2, **caractérisé en ce que** le couvercle (4) se fixe au récipient (2) par serrage ou accrochage.

4. Dispositif selon l'une des revendications précédentes, **caractérisé en ce que** le couvercle (4) comporte au moins une soupape de surpression pour éviter une surpression dans le récipient (2) lorsque le couvercle (4) est placé dessus.

5. Dispositif selon l'une des revendications précédentes, **caractérisé en ce que** la capsule (5) s'accroche ou se verrouille au logement (40).

6. Dispositif selon l'une des revendications précédentes, **caractérisé en ce que** le dispositif (1) comporte des moyens pour émettre un signal optique et/ou acoustique pour afficher la fin de la phase d'infusion.

7. Dispositif selon l'une des revendications précédentes, **caractérisé en ce que** le couvercle (4) porte un joint annulaire qui s'applique contre la surface de contact du récipient pour assurer l'étanchéité.

8. Dispositif selon l'une des revendications précédentes, **caractérisé en ce que** le récipient (2) a une forme principalement cylindrique avec un fond.

9. Dispositif selon l'une des revendications précédentes, **caractérisé en ce que** le récipient (2) est réalisé au moins en partie en un matériau transparent, notamment en verre.

10. Dispositif selon l'une des revendications précédentes, **caractérisé en ce que** la capsule (5) a un tamis sur son côté tourné vers le volume intérieur du récipient (2).

11. Procédé de préparation d'une boisson comprenant les étapes suivantes consistant à :
- remplir le récipient (2) avec de l'eau,
- placer une capsule (5) avec un produit d'extraction dans un couvercle (4),
- appliquer le récipient (2) sur une embase (3) pour chauffer l'eau,
- fixer le couvercle (2) avant, pendant ou après le chauffage de l'eau du récipient (2),
- retourner le récipient (2) avec le couvercle (4) pour infuser une boisson pendant une durée prédéfinie,
- retourner le récipient et vider la boisson, et
- avant la phase d'infusion, lire le code de la capsule (5) pour commander la durée d'infusion et/ou la température de l'eau.

12. Procédé selon la revendication 11, **caractérisé en ce que** enlever le couvercle (4) pour prélever la boisson, le récipient (2) étant utilisé pour boire.

13. Dispositif selon la revendication 12, **caractérisé en ce que** après enlèvement du couvercle (4), installer un accessoire sur le réservoir (2) pour boire.
